# EUROPEAN PATENT APPLICATION

(11) **EP 1 873 477 A2**
(43) Date of publication of application: **02.01.2008**
(21) Application number: 05807906.2
(22) Date of filing: 13.10.2005
(51) Int. Cl.: G01B 5/004

(54) **DEVICE FOR LOCATING POINTS ON MAPS AND DETERMINING CO-ORDINATES**

(30) Priority: 24.11.2004 ES 200402888
(71) Applicant: Gomez Mataix, Gonzalo Vicente, 46390 Los Ochandos Requena (ES)
(72) Inventor: Gomez Mataix, Gonzalo Vicente, 46390 Los Ochandos Requena (ES)
(74) Representative: Irache Pereira Tona, Maria
(86) International application number: PCT/ES2005/000559
(87) International publication number: WO 2006/058931

(57) **Abstract**

The device has a first circular, transparent sheet (1), where a number of segment pairs at different scales (2), (3), (4) and (5) are inscribed, with one or more of these segment pairs having their corresponding graded scales indicated on their two straight lines (6) and (7); with two transparent sheets (9) and (11) superimposed on the first sheet and provided with their corresponding straight line alignments (10) and (12) that originate at the centers of these sheets; with a system (13a and 13b) that joins the three sheets so that they can be rotated with respect to each other, all with respect to their centers, but making it impossible for any accidental rotation to occur. To locate points or to determine coordinates, a relation is established, by means of a homothety using alignments (10) and (12), between the segment pair corresponding to the scale of the map and the greatest-scale graded segment pair, thus obtaining a precision consistent with that of current GPS receivers.

## Description

### TECHNIQUE SECTOR

This invention, as indicated by the title of this descriptive report, consists of a simple, low-cost precision mechanical device to locate known coordinates on maps or to determine the coordinates of points located on maps. In both cases, maps should have an UTM grid system or other similar geo-referencing system with fixed cell dimensions. Grids based on geographic coordinates are therefore excluded (because their dimensions are variable). This instrument is supplementary to the use of GPS (Global Positioning System) location devices, which means that the precision currently offered by these electronic devices can be exploited to its fullest. Based on its use and function, the device would then correspond to the definition of a coordinate plotter.

### STATE OF THE TECHNIQUE

Current GPS receiving devices are capable of offering precisions between 5 and 10 m relatively easily, and with more sophisticated systems it is currently possible to get precisions of the order of one to two meters. This latter technology, however, is not as widespread due to the competition for terrestrial stations and its higher cost.

Some GPS receivers have digitized cartographic bases incorporated to their software that allow viewing on the screen the position of the operator. However, due to the high amount of memory required by this operation, the possibility is currently limited to very simple or very local cartographic bases.

The first group would include those devices that show only road maps and urban street maps of cities. They are called "navigators", and many of them have been incorporated to the optional or standard equipment of some vehicles. GPS devices with nautical charts belong to this category as well. In these cases, the low information density and the lower scale allow a simpler storage and handling of the GPS receiving device, since a lower memory capacity is required.

The second group includes very specific equipment for professional use, as is the case for example of a certain next-generation land movement machinery which allows the operator to compare at any given time the state of the land after the action of the machine with the state that is sought for by the construction project.

With the exception of these options, the location coordinates of the position yielded by a GPS device in the open field (outside road maps and city street maps) or in maritime navigation, is necessarily transferred to a paper map or nautical chart. Even though there are GPS receiving devices with extensive and detailed cartography bases, the manual translation of the coordinates obtained would still be the least costly option, and thus the most accessible for the average user.

Due to its operation simplicity, and given that most topographic maps have an incorporated UTM coordinate grid, UTM coordinates are particularly useful for this purpose.

The translation of coordinates can be done with a graded rule, although having to determine coordinate X and coordinate Y simultaneously on the map makes the operation difficult. There are some compasses and rules that incorporate pairs of graded scales at different scales with a common origin for all scales to facilitate the positioning of the point. The problem in all cases is that the precision of these scales is usually not smaller than millimeters, half a millimeter at the most.

Using a millimeter-precision graded scale, it is impossible to take full advantage of the precision offered by the GPS receiving device. In fact, on a 1:50,000 scale map, which is a very usual scale, each millimeter represents 50 meters. On a 1:25,000 scale map, each millimeter represents 25 m. As it can be seen, using this type of simple devices we would be far from taking advantage of the benefits of obtaining a pair of coordinates with the GPS device with an error of the order of only a few meters.

As regards the opposite operation, that is, obtaining the coordinates of a certain point located on a map, the options currently available are the same, with similar problems to those already discussed. Thus, when determining the coordinates of a given point on a 1:50,000 scale map using a millimeter scale, the cumulative error can be up to several dozen meters.

This lack of precision for both operations, probably admissible for recreational use (hiking), may be unacceptable in certain professional specializations (topography, forest engineering, military use, etc.).

The device object of this invention is designed to mitigate these problems by allowing a very precise location of points and determination of coordinates in a simple and inexpensive way. To this end, a homothety is materialized by means of two revolving radii between graded straight lines at a scale that allows differentiating small distances and straight lines that represent the same longitude at the scale used by the map.

### DESCRIPTION OF THE INVENTION

The device described by this invention consists in a first transparent sheet where a number of segment pairs are inscribed. Each pair of segments is formed by two straight lines joined at a square angle on one of their ends at a point called vertex, the longitude of each of these straight lines being equivalent to one kilometer based on a certain scale, which is the scale of the pair of segments. All the vertexes of the pairs of segments distributed on this first sheet are straightly aligned, and the ends of the straight lines that form them are also distributed following a second straight alignment. Both alignments go through a same point on the sheet. No vertex is located outside the segment that joins this point with the vertex of the greatest-scale segment pair. The straight lines of the segment pairs oriented in a given direction are called ordinates, and those oriented in that direction plus a ninety-degree angle in a clockwise direction are called abscises. At least one of the pairs of segments, and in any case the one corresponding to the greatest scale, is provided with graded scales on its two straight lines with a minimum grading of an integer or a fraction of a meter depending on the scale of the pair of segments, originating at the vertex. This first sheet is also provided with a number of straight lines whose thickness is different from that of the straight lines forming the segment pairs and are distributed parallel to the straight lines of the segment pairs in both directions, thus forming a grid pattern covering most of the first sheet, called adjustment lines.

Also, the device described by this invention has a second transparent sheet that is superimposed on the first sheet and which has a straight alignment originating at the center of this second sheet.

The device described by this invention has a third transparent sheet that is superimposed on the second sheet and which has a straight alignment originating at the center of this third sheet.

The three sheets present in the device of the invention are joined together so that they can be rotated with respect to each other, the rotation centers of the second and third sheets being at their respective centers, whereas the rotation center of the first sheet is the middle point of the straight line joining the ends of the segment pairs. The joining system should make it impossible for any accidental rotation of the sheets to occur. The shape of the sheets is such that a differentiated rotation of the second and third sheets is possible. To facilitate this condition, both sheets can be circular with the third one having a smaller diameter.

The procedure to locate a point of given UTM coordinates on a map provided with a UTM grid consists in rotating the second sheet until the straight line traced on it indicates, on the graded scale of the abscises of the greatest-scale segment pair, the value of the last three figures in meters corresponding to the X UTM coordinate of the point in question. Then, the third sheet is rotated, keeping the relative position of the second sheet with respect to the first sheet, until the straight line traced on the third sheet indicates, on the graded scale of the ordinates of the greatest-scale segment pair, the value of the last three figures in meters corresponding to the Y UTM coordinate of the point in question. If the pair of segments corresponding to the scale of the map has a graded scale, no sheet shall be rotated.

Afterwards, without changing the relative rotation of the three sheets, the device is placed on the map in such a way that the-orientation-of the straight lines that are parallel to the X UTM coordinates forming the UTM grid of the map is the same as the orientation of the abscises of the segment pairs. To this end, the adjustment lines traced on the first sheet will be used as a guide, ensuring that the values of the grading of the abscises straight line of the greatest-scale vertex pair increase in an opposite direction as that of the X UTM coordinates of the map, and that the grading of the ordinate straight line of the greatest-scale vertex pair increases in an opposite direction as that of the Y UTM coordinates of the map.

The device is placed on the map without changing the relative rotation of the three sheets or their orientation with respect to the UTM grid, until, in the first place, the point created on the device by the intersection between the straight line traced on the second sheet and the abscises straight line of the segment pair corresponding to the scale of the map is superimposed on the straight line that runs parallel to the Y UTM coordinates axis that forms the UTM grid represented on the map and that has the highest X UTM coordinate value among those with an X UTM coordinate value lower than the point. In the second place, and simultaneously, the point created on the device by the intersection between the straight line traced on the third sheet and the ordinates straight line of the segment pair corresponding to the scale of the map is superimposed on the straight line that runs parallel to the X UTM coordinates axis that forms the UTM grid represented on the map and that has the highest Y UTM coordinate value among those with a Y UTM coordinate value lower than the point.

If the segment pair corresponding to the map scale has graded scales, the device is placed on the map until, in the first place, the point of the graded scale of the abscises segment pair corresponding to the scale of the map indicating the value of the last three figures in meters of the X UTM coordinate of the point in question is superimposed on the straight line that runs parallel to the Y UTM coordinates axis of the map that forms the UTM grid represented on the map and that has the highest X UTM coordinate value among those with an X UTM coordinate value lower than the point. In the second place, and simultaneously, the point of the graded scale of the ordinates segment pair corresponding to the scale of the map indicating the value of the last three figures in meters of the Y UTM coordinate of the point in question is superimposed on the straight line that runs parallel to the X UTM coordinates axis that forms the UTM grid represented on the map-and-that has-the highest Y UTM coordinate value among those with a Y UTM coordinate value lower than the point.

Thus, the vertex of the segment pair corresponding to the scale of the map will mark the location of the point in question.

The procedure to determine the UTM coordinates of a certain point located on a map that has a UTM grid consists in placing the device on top of the map, with the vertex of the segment pair corresponding to the map scale over the point in question in such a way that the orientation of the straight lines that run parallel to the X UTM coordinates axis forming the UTM grid is the same as that of the abscise straight lines of the segment pairs. To this end, the adjustment lines traced on the first sheet will be used as guide, ensuring that the values of the grading of the abscises straight line of the greatest-scale vertex pair increase in an opposite direction as that of the X UTM coordinates of the map, and that the grading of the ordinate straight line of the greatest-scale vertex pair increases in an opposite direction as that of the Y UTM coordinates of the map.

After this step, one of the sheets is rotated until the straight line on that sheet is located over the intersection point between the abscises straight line of the segment pair corresponding to the scale of the map and the straight line that runs parallel to the Y UTM coordinates axis of the map that forms the UTM grid represented on the map and that has the highest X UTM coordinate value among those with an X UTM coordinate value lower than the point. The straight line traced on this sheet will indicate, in the graded scale of the abscises straight line of the greatest-scale segment pair, the meter value of the X UTM coordinate of the point in question. If the segment pair corresponding to the map scale has graded scales, the meter value of the X UTM coordinate of the point in question will be indicated directly on the scale of the abscises straight line of this segment pair by the intersection point between this abscises straight line and the straight line that runs parallel to the Y UTM coordinates axis of the map that forms the UTM grid represented on the map and that has the highest X UTM coordinate value among those with an X UTM coordinate value lower than the point. Therefore, in such a situation the sheet should not be rotated.

The kilometer value of the X UTM coordinate of the point, to be added to the meter value of the X UTM coordinate of the point determined before in order to obtain the total X UTM coordinate, is the X UTM coordinate of the straight line of the UTM grid that runs parallel to the Y UTM coordinates axis that has the highest X UTM coordinate value among those with an X UTM coordinate value lower than the point.

After or before the previous operation, but always after the first step described, one of the sheets is rotated until the straight line on that sheet is located over the intersection point between the ordinates straight line of the segment pair corresponding to the scale of the map and the straight line that runs parallel to the X UTM coordinates axis of the map that forms the UTM grid represented on the map and that has the highest Y UTM coordinate value among those with a Y UTM coordinate value lower than the point. The straight line traced on this sheet will indicate, in the graded scale of the ordinates straight line of the greatest-scale segment pair, the meter value of the Y UTM coordinate of the point in question. If the segment pair corresponding to the map scale has graded scales, the meter value of the Y UTM coordinate of the point in question will be indicated directly on the scale of the ordinates straight line of this segment pair by the intersection point between this ordinates straight line and the straight line that runs parallel to the X UTM coordinates axis of the map that forms the UTM grid represented on the map and that has the highest Y UTM coordinate value among those with a Y UTM coordinate value lower than the point. Therefore, in such a situation the sheet should not be rotated.

The kilometer value of the Y UTM coordinate of the point, to be added to the meter value of the Y UTM coordinate of the point determined before in order to obtain the total Y UTM coordinate, is the Y UTM coordinate of the straight line of the UTM grid that runs parallel to the X UTM coordinates axis that has the highest Y UTM coordinate value among those with a Y UTM coordinate value lower than the point.

The following section includes a series of figures that are part of the present descriptive report and are intended to allow a better understanding of the invention. These figures represent the invention but are illustrative rather than restrictive.

### FIGURE DESCRIPTION

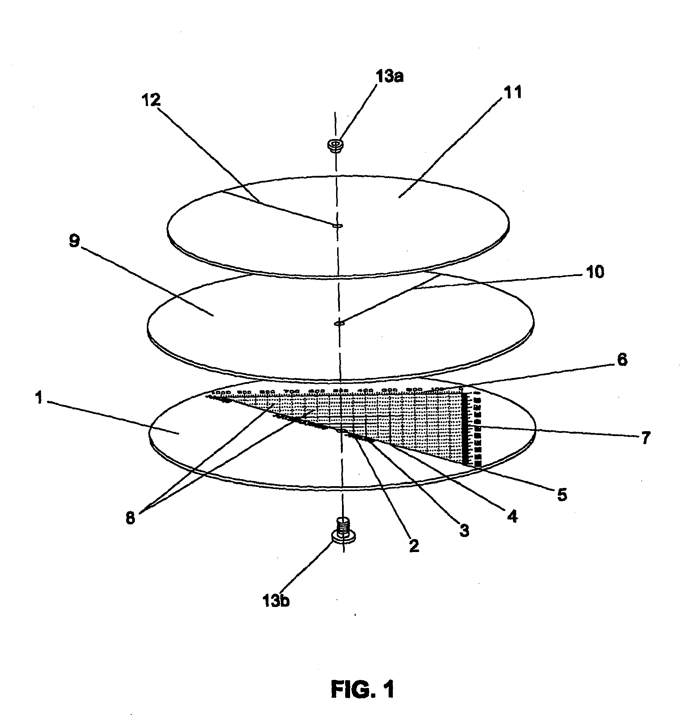

Figure 1.- Blown-up perspective view of the device object of the invention.

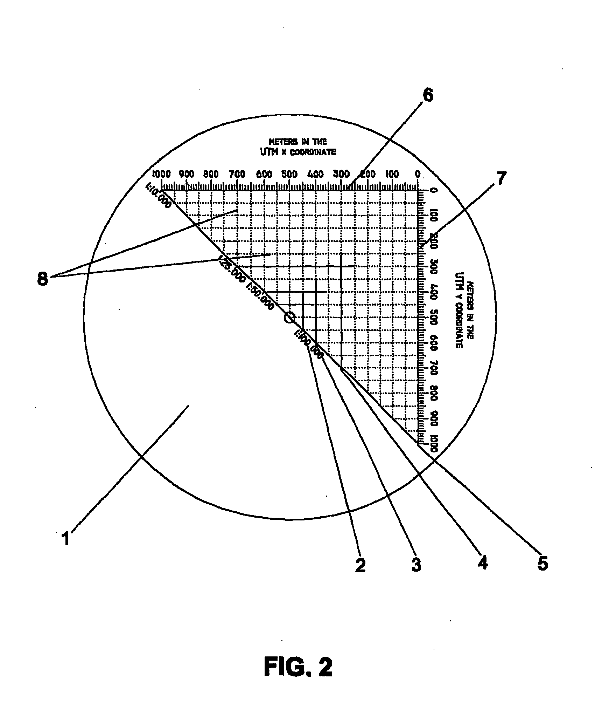

Figure 2.- Plant view of the first sheet of the invention device, where four segment pairs have been represented at the scales 1:100,000, 1:50,000, 1:25,000 and 1:10,000.

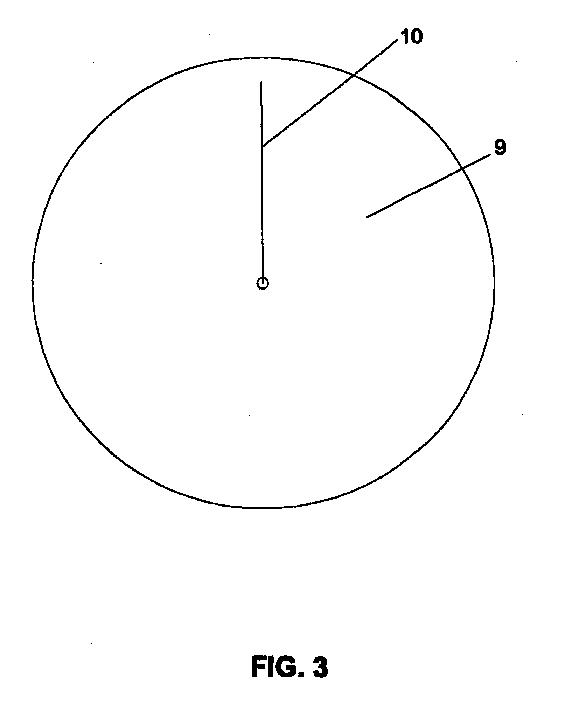

Figure 3.- Plant view of the second sheet of the invention device.

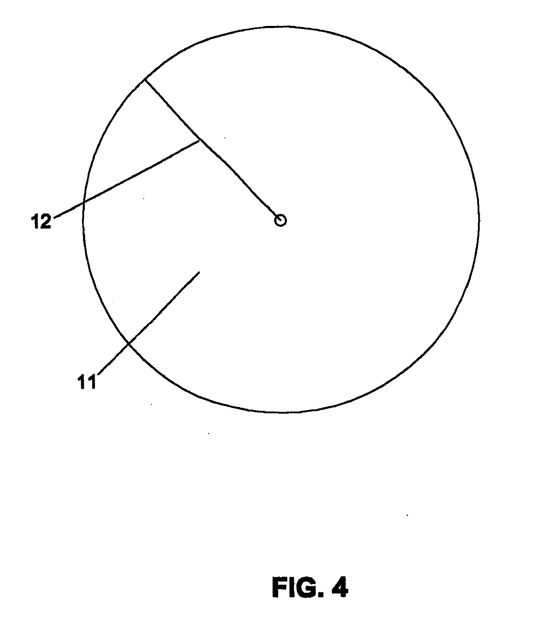

Figure 4.- Plant view of the third sheet of the invention device.

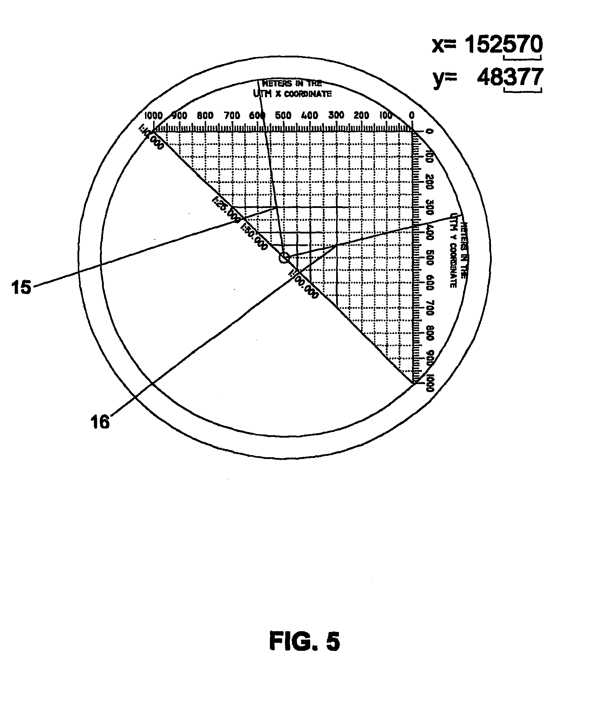

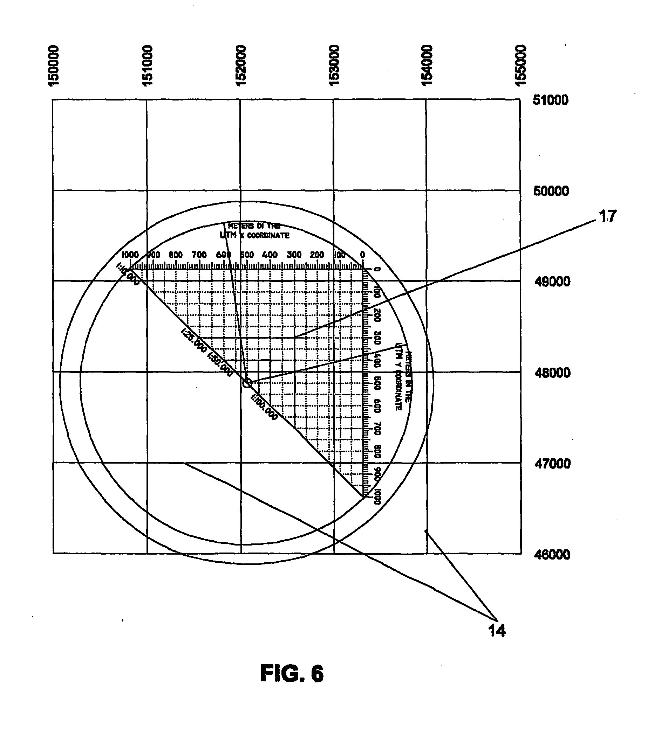

Figures 5 to 6.- Possible example of the location on a map of a known point of coordinates.

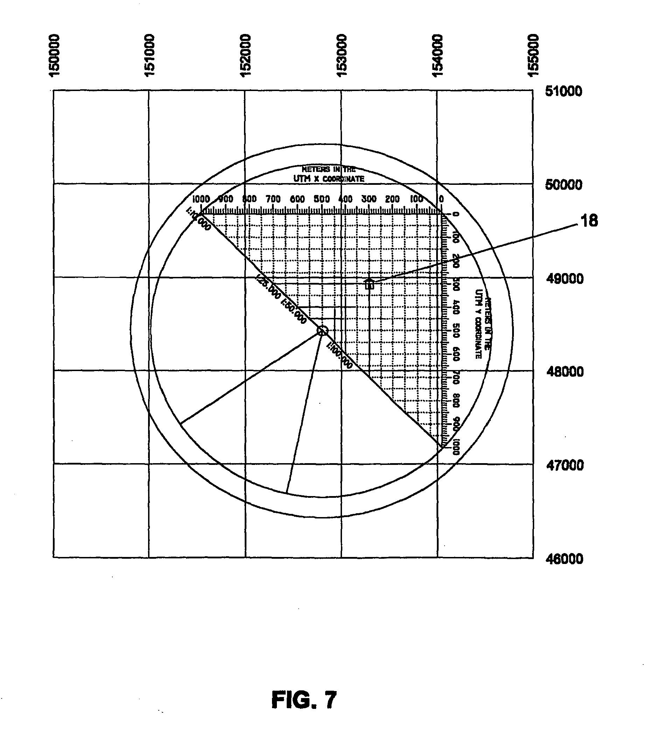

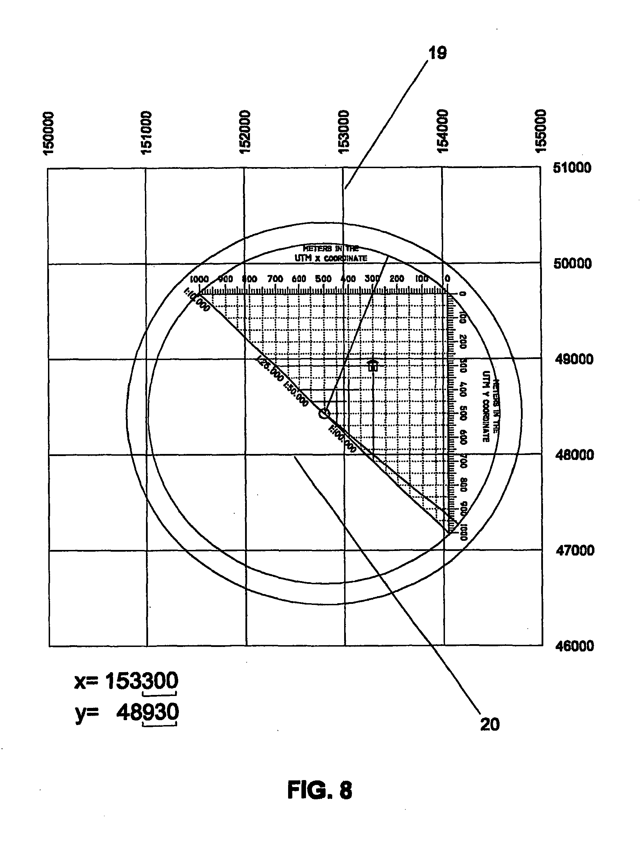

Figures 7 to 8.- Possible example of the determination of coordinates of a point located on a map.

### DESCRIPTION OF A DEVELOPMENT PROCESS FOR THE INVENTION

The following paragraphs describe a development process for the invention, based on the previously described figures.

The device consists of a first circular transparent sheet (1), where four segment pairs are inscribed at scales 1:100,000 (2), 1:50,000 (3), 1:25,000 (4) and 1:10,000 (5). This last pair of segments has graded scales on both its straight lines (6) and (7), with a minimum grading of 10 m at a 1:10,000 scale. Adjustment lines (8) can be seen as a broken line.

Also, the device has a second circular transparent sheet (9) that is superimposed on the first sheet and which has a straight alignment (10) originating at the center of this second sheet. This sheet has the same diameter as the first sheet.

The device described by this invention has a third circular transparent sheet (11) that is superimposed on the second sheet and which has a straight alignment (12) originating at the center of this third sheet. The diameter of this sheet is smaller than that of the second sheet to allow it to be rotated by the user independently from the second sheet.

The device described by the invention has a system (13a and 13b) that joins the three sheets so that they can be rotated with respect to each other, all with respect to their centers, but making it impossible for any accidental rotation to occur without the user of the device intending it.

The following paragraphs will describe the operations required to locate a UTM coordinates point on a 1:25,000 scale map (x=152570, y=48377) using the development process previously described for the device of the invention.

First, the second sheet (9) is rotated until the straight line (10) points on the scale of the abscises straight line (6) of the first sheet (1) to the last three figures in meters of the X UTM coordinate, in this case 570. Then, the third sheet (11) is rotated, without changing the relative position of the second sheet (9) with respect to that of the first sheet (1), until the straight line (12) points on the scale of the ordinates straight line (7) of the first sheet (1) to the last three figures in meters of the Y UTM coordinate, in this case 377.

Afterwards, the device is placed on the map keeping the abscises straight lines of the segment pairs and the lines that run parallel to the X UTM coordinates axis that form the UTM grid of the map (14) parallel - using adjustment lines (8) as a guide. Then the device is moved until, in the first place, the intersection between the straight line (10) of the second sheet and the abscises straight line of the segment pair at a scale 1:25,000 (4) -- (15) is superimposed on the straight line of the UTM grid that runs parallel to the Y UTM coordinates axis with UTM coordinates X 152000. In the second place, and simultaneously, the intersection between the straight line (12) of the third sheet and the ordinates straight line of the same segment pair (4) - (16) is superimposed on the straight line of the UTM grid that runs parallel to the X UTM coordinates axis with UTM coordinates Y 48000. The point to locate is signaled by the vertex of the segment pair at scale 1:25,000 (17).

The following paragraphs will describe the operations required to determine the coordinates of a point located on a 1:25,000 scale map, represented by the symbol of a house (18), using the development process previously described for the device of the invention.

First, the device is placed on the map keeping the abscises straight lines of the segment pairs and the lines that run parallel to the X UTM coordinates axis that form the UTM grid of the map (14) parallel - using adjustment lines (8) as a guide and placing the vertex of the segment pair at a scale 1:25,000 over the point in question (18).

Then, the second sheet (9) is rotated until the straight line (10) is on the intersection point between the abscises straight line of the segment pair (4) and the straight line (19) of the UTM grid parallel to the Y UTM coordinates axis closest to point (18) to the west. The X UTM coordinate of the point in question is the kilometer value of the X UTM coordinate of the straight line (19) plus the meter value indicated by the straight line (10) on the abscises scale of the first sheet (6). That is, x=153300.

Then, without changing the relative position of the first and second sheets in this case, the third sheet (11) is rotated until the straight line (12) is on the intersection point between the ordinates straight line of the segment pair (4) and the straight line (20) of the UTM grid parallel to the X UTM coordinates axis closest to point (18) to the south. The Y UTM coordinate of the point in question is the kilometer value of the Y UTM coordinate of the straight line (20) plus the meter value indicated by the straight line (12) on the ordinates scale of the first sheet (6). That is, y=48930.

## Claims

1. DEVICE TO LOCATE POINTS ON MAPS AND TO DETERMINE COORDINATES, **characterized** because it has:
-- a first transparent sheet (1) where segment pairs (2)-(3)-(4)-(5) formed by two straight lines joined at a square angle on one of their ends are inscribed, the length of each of these straight lines being equivalent to one kilometer based on a given scale specific to each segment pair and different from the rest, preferably indicated on each pair of segments; all vertexes of these segment pairs being aligned on a straight line and the ends of the straight lines forming them being aligned following a second straight line; both alignments going through a same point on the sheet so that there is no vertex outside the segment joining this point to the vertex of the greatest-scale segment pair; the straight lines of the segment pairs oriented in a given direction being called ordinates, and those oriented in that direction plus a ninety-degree angle in a clockwise direction being called abscises; at least one of the segment pairs, and in any case that with the greatest scale, having graded scales on both its straight lines (6) and (7), with a minimum grading of an integer or fraction of a meter based on the scale of the segment pair, and with its origin at the vertex;
-- a second circular transparent sheet (9) that is superimposed on the first sheet and which has a straight alignment (10) originating at the center of this second sheet;
-- a third circular transparent sheet (11) that is superimposed on the second sheet and which has a straight alignment (12) originating at the center of this third sheet;
-- a system that joins the three sheets (13a and 13b) so that they can be rotated with respect to each other, the rotation center of the second and third sheets being on their respective centers, and the rotation center of the first sheet being the middle point of the straight line joining the ends of the greatest-scale segment pair, making it impossible for any accidental rotation to occur without the user of the device intending it.

2. DEVICE TO LOCATE POINTS ON MAPS AND TO DETERMINE COORDINATES, according to claim 1, **characterized by** the circular shape of the second (9) and third (11) sheets, and because the third sheet is of a smaller diameter to facilitate a differentiated movement of each sheet.

3. DEVICE TO LOCATE POINTS ON MAPS AND TO DETERMINE COORDINATES, according to claim 1, **characterized** because the shape of the first sheet (1) is preferably circular.

4. DEVICE TO LOCATE POINTS ON MAPS AND TO DETERMINE COORDINATES, according to claim 1, **characterized** because the vertexes of the segment pairs have around them a geometric shape that highlights their position.

5. DEVICE TO LOCATE POINTS ON MAPS AND TO DETERMINE COORDINATES, according to claim 1, **characterized** because the first sheet has, on the vertexes of the segment pairs, orifices through which it is possible to mark, using a pencil or similar utensil, the position of the point being studied on the map; and because the other two sheets have holes or indentations on the surface outside straight lines (10) and (12) so that the orifices on the first sheet remain free after these two upper sheets are rotated.

6. DEVICE TO LOCATE POINTS ON MAPS AND TO DETERMINE COORDINATES, according to claim 1, **characterized** because it has several adjustment straight lines (8) inscribed onto the first sheet (1) that run parallel to the straight lines of the segment pairs in both directions, forming a grid pattern that covers most of the first sheet (1).

7. DEVICE TO LOCATE POINTS ON MAPS AND TO DETERMINE COORDINATES, according to claim 1, **characterized** because the adjustment straight lines (8) of the first sheet (1) are-represented with a different trace than that used to represent the straight lines forming the segment pairs.

8. PROCEDURE TO LOCATE A KNOWN UTM COORDINATE POINT WITH THE DEVICE DESCRIBED BY THE INVENTION ON A MAP THAT HAS A UTM GRID, **characterized** because the second sheet (9) is rotated until the straight line traced on it (10) indicates, on the scale graded on the abscises straight line (6) of the greatest-scale segment pair, the value of the three last figures in meters of the X UTM coordinate of the point in question; then the third sheet (11) is rotated, keeping the relative position of the second sheet (9) fixed with respect to that of the first sheet (1), until the straight line traced on the third sheet (12) indicates, on the scale graded on the ordinates straight line (7) of the greatest-scale segment pair, the value of the last three figures in meters of the Y UTM coordinate of the point in question; after this, without changing the relative rotation of the three sheets, the device is placed on the map in such a way that the orientation of the straight lines that run parallel to the X UTM coordinates axis that form the UTM grid of the map is the same as that of the abscises straight lines of the segment pairs, using the adjustment lines (8) traced on the first sheet as a guide, ensuring that the values of the grading of the abscises straight line (6) of the greatest-scale vertex pair increase in an opposite direction as that of the X UTM coordinates of the map, and that the grading of the ordinate straight line (7) of the greatest-scale vertex pair increases in an opposite direction as that of the Y UTM coordinates of the map; afterwards, and without changing the relative rotation of the three sheets or their orientation as regards the UTM grid, the device is placed on the map until, in the first place, the point created on the device by the intersection between the straight line traced (10) on the second sheet and the abscises straight line of the segment pair corresponding to the scale of the map is superimposed on the straight line that runs parallel to the Y UTM coordinates axis that forms the UTM grid represented on the map and that has the highest X UTM coordinate value among those with an X UTM coordinate value lower than the point, and in the second place, and simultaneously, the point created on the device by the intersection between the straight line traced (12) on the third sheet and the ordinates straight line of the segment pair corresponding to the scale of the map is superimposed on the straight line that runs parallel to the X UTM coordinates axis that forms the UTM grid represented on the map and that has the highest Y UTM coordinate value among those with a Y UTM coordinate value lower than the point, the vertex of the segment pair of the map scale signaling the point to locate.

9. PROCEDURE TO DETERMINE THE UTM COORDINATES OF A CERTAIN POINT LOCATED ON A MAP THAT HAS A UTM GRID USING THE DEVICE DESCRIBED BY THIS INVENTION, **characterized** because the device is placed on top of the map, with the vertex of the segment pair corresponding to the map scale over the point in question in such a way that the orientation of the straight lines that run parallel to the X UTM coordinates axis forming the UTM grid of the map is the same as that of the abscise straight lines of the segment pairs, using the adjustment lines (8) traced on the first sheet (1) as a guide, ensuring that the values of the grading of the abscises straight line (6) of the greatest-scale vertex pair increase in an opposite direction as that of the X UTM coordinates of the map, and that the grading of the ordinate straight line (7) of the greatest-scale vertex pair increases in an opposite direction as that of the Y UTM coordinates of the map. Then, one of the sheets is rotated until the straight line on that sheet is located over the intersection point between the abscises straight line of the segment pair corresponding to the scale of the map and the straight line that runs parallel to the Y UTM coordinates axis of the map that forms the UTM grid represented on the map and that has the highest X UTM coordinate value among those with an X UTM coordinate value lower than the point. The X UTM coordinate of the point in question is equal to the X UTM coordinate of the straight line of the UTM grid that runs parallel to the Y UTM coordinates axis that has the highest X UTM coordinate value among those with an X UTM coordinate value lower than the point, plus the meter value on the graded scale of the abscises straight line (6) of the greatest-scale segment pair indicated by the straight line that intersects the abscises straight lines of the segment pairs of the first sheet. After or before the previous operation, but always after the first step described, one of the sheets is rotated until the straight line on that sheet is located over the intersection point between the ordinates straight line of the segment pair corresponding to the scale of the map and the straight line that runs parallel to the X UTM coordinates axis of the map that forms the UTM grid represented on the map and that has the highest Y UTM coordinate value among those with a Y UTM coordinate value lower than the point. The Y UTM coordinate of the point in question is equal to the Y UTM coordinate of the straight line of the UTM grid that runs parallel to the X UTM coordinates axis that has the highest Y UTM coordinate value among those with a Y UTM coordinate value lower than the point, plus the meter value on the graded scale of the ordinates straight line (7) of the greatest-scale segment pair indicated by the straight line that intersects the ordinates straight lines of the segment pairs of the first sheet.

10. DEVICE TO LOCATE POINTS ON MAPS AND TO DETERMINE COORDINATES, according to claim 1, **characterized** because the length of the straight lines forming the segment pairs is equivalent to the distance between the straight lines that form the grid of any other established Cartesian coordinates cartographic system, based on the scale of each segment pair.

11. DEVICE TO LOCATE POINTS ON MAPS AND TO DETERMINE COORDINATES, according to claim 1, **characterized** because graded scales (6) and (7) have a minimum grading of an integer or fraction of any longitude measurement unit consistent with that of the segment pair scale.

12. PROCEDURE TO LOCATE A KNOWN CARTESIAN COORDINATES POINT USING THE DEVICE DESCRIBED BY THIS INVENTION BASED ON ANY CARTESIAN COORDINATES CARTOGRAPHIC REFERENCE SYSTEM ON A MAP THAT HAS A GRID OF THAT SAME CARTOGRAPHIC SYSTEM, **characterized** because the second sheet (9) is rotated until the straight line traced on it (10) indicates on the graded scale of the abscises straight line (6) of the greatest-scale segment pair, the length by which the value of the X coordinate of the point in the cartographic system exceeds the value indicated by the straight line of the cartographic system grid that runs parallel to the Y axis of said system of lowest X coordinate among those that form the cell where the point is located; then, the third sheet (11) is rotated, keeping the relative position of the second sheet (9) fixed with respect to that of the first sheet (1), until the straight line traced on the third sheet (12) indicates, on the scale graded on the ordinates straight line (7) of the greatest-scale segment pair, the length by which the value of the Y coordinate of the point in the cartographic system exceeds the value indicated by the straight line of the cartographic system grid that runs parallel to the X axis of said system of lowest Y coordinate among those that form the cell where the point is located; then, without changing the relative rotation of the three sheets, the device is placed on the map in such a way that the orientation of the-straight lines that run parallel to the X coordinates axis of the cartographic system that form the cartographic system grid of the map is the same as that of the abscises straight lines of the segment pairs, using the adjustment lines (8) traced on the first sheet as a guide, ensuring that the values of the grading of the abscises straight line (6) of the greatest-scale vertex pair increase in an opposite direction as that of the X coordinates of the cartographic system used on the map, and that the grading of the ordinate straight line (7) of the greatest-scale vertex pair increases in an opposite direction as that of the Y coordinates of the cartographic system used on the map; afterwards, and without changing the relative rotation of the three sheets or their orientation as regards the grid of the cartographic system, the device is placed on the map until, in the first place, the point created on the device by the intersection between the straight line traced (10) on the second sheet and the abscises straight line of the segment pair corresponding to the scale of the map is superimposed on the straight line that runs parallel to the Y coordinates axis of the cartographic system that forms the grid of said system represented on the map and that has the highest X coordinate value of the cartographic system among those with an X coordinate value of said system lower than the point, and in the second place, and simultaneously, the point created on the device by the intersection between the straight line traced (12) on the third sheet and the ordinates straight line of the segment pair corresponding to the scale of the map is superimposed on the straight line that runs parallel to the X coordinates axis of the cartographic system used on the map that forms the grid of said system represented on the map and that has the highest Y coordinate value of the cartographic system among those with a Y coordinate value of said system lower than the point, the vertex of the segment pair of the map scale signaling the point to locate.

13. PROCEDURE TO DETERMINE THE CARTESIAN COORDINATES MARKED BY ANY COORDINATES CARTOGRAPHIC REFERENCE SYSTEM OF A CERTAIN POINT LOCATED ON A MAP THAT HAS A GRID OF THE SAME CARTOGRAPHIC SYSTEM USING THE DEVICE DESCRIBED BY THIS INVENTION, **characterized** because the device is placed on top of the map, with the vertex of the segment pair corresponding to the map scale over the point in question in such a way that the orientation of the straight lines that run parallel to the X coordinates axis of the cartographic system forming the grid of said cartographic system on the map is the same as that of the abscise straight lines of the segment pairs, using the adjustment lines (8) traced on the first sheet (1) as a guide, ensuring that the values of the grading of the abscises straight line (6) of the greatest-scale vertex pair increase in an opposite direction as that of the X coordinates of the cartographic system used on the map, and that the grading of the ordinate straight line (7) of the greatest-scale vertex pair increases in an opposite direction as that of the Y coordinates of the cartographic system used on the map. Then, one of the sheets is rotated until the straight line on that sheet is located over the intersection point between the abscises straight line of the segment pair corresponding to the scale of the map and the straight line that runs parallel to the Y coordinates axis of the cartographic system used on the map that forms the grid of said system represented on the map and that has the highest X coordinate value of the cartographic system among those with an X coordinate value of said system lower than the point. The X coordinate of the cartographic system used for the point in question is equal to the X coordinate in said system of the straight line of the cartographic system grid that runs parallel to the Y axis of said system with lowest X coordinate among those that form the cell where the point is located, plus the length value on the graded scale of the abscises straight line (6) of the greatest-scale segment pair indicated by the straight line that intersects the abscises straight lines of the segment pairs of the first sheet. After or before the previous operation, but always after the first step described, one of the sheets is rotated until the straight line on that sheet is located over the intersection point between the ordinates straight line of the segment pair corresponding to the scale of the map and the straight line that runs parallel to the X coordinates axis of the cartographic system used on the map that forms the grid of said system represented on the map and that has the highest Y coordinate value of the cartographic system among those with a Y coordinate value of said system lower than the point. The Y coordinate of the cartographic system used for the point in question is equal to the Y coordinate in said system of the straight line of the cartographic system grid that runs parallel to the X axis of said system with lowest Y coordinate among those that form the cell where the point is located, plus the length value on the graded scale of the ordinates straight line (7) of the greatest-scale segment pair indicated by the straight line that intersects the ordinates straight lines of the segment pairs of the first sheet.
